# EUROPÄISCHE PATENTSCHRIFT

(11) **EP 1 463 658 B1**
(45) Veröffentlichungstag und Bekanntmachung des Hinweises auf die Patenterteilung: **01.06.2005**
(21) Anmeldenummer: 02796624.1
(22) Anmeldetag: 13.12.2002
(51) Int. Cl.: B60T 8/40, B60T 17/22, G01L 5/28

(54) **VERFAHREN ZUR ERKENNUNG VON GASEN BZW. LUFT BEI EINER ELEKTROHYDRAULISCHEN BREMSANLAGE FÜR KRAFTFAHRZEUGE**
METHOD FOR THE RECOGNITION OF GASES OR AIR IN AN ELECTRO-HYDRAULIC BRAKING SYSTEM FOR MOTOR VEHICLES
PROCEDE DE RECONNAISSANCE DE GAZ OU D'AIR DANS UN SYSTEME DE FREINAGE ELECTRO-HYDRAULIQUE POUR VEHICULES AUTOMOBILES

(30) Priorität: 20.12.2001 DE 10162626
(43) Veröffentlichungstag der Anmeldung: 06.10.2004
(73) Patentinhaber: Continental Teves AG & Co. OHG, 60488 Frankfurt am Main (DE)
(72) Erfinder: FEIGEL, Hans-Jörg, 61191 Rosbach (DE)
(86) Internationale Anmeldenummer: PCT/EP2002/014200
(87) Internationale Veröffentlichungsnummer: WO 2003/053754

(56) Entgegenhaltungen:
- WO-A-91/17073
- WO-A-99/41125
- DE-A- 19 603 867
- DE-A- 19 603 909

## Beschreibung

Die Erfindung betrifft ein Verfahren zur Erkennung von Gasen bzw. Luft bei einer elektrohydraulischen Bremsanlage für Kraftfahrzeuge, die in einer Betriebsart "Brake-by-Wire" sowohl vom Fahrzeugführer als auch unabhängig vom Fahrzeugführer ansteuerbar ist, mit einem mittels eines Bremspedals betätigbaren, mindestens einen Druckraum aufweisenden Hauptbremszylinder, einem drucklosen Druckmittelvorratsbehälter, einer mittels einer elektronischen Steuer- und Regeleinheit ansteuerbaren hydraulischen Druckquelle, mit deren Druck zwei einem Bremshreis zugeordnete Radbremsen des Fahrzeuges beaufschlagbar sind, die mittels mindestens einer durch ein Trennventil absperrbaren Verbindung an den Hauptbremszylinder angeschlossen sind und denen Druckregelventile bzw. Ein- und Auslassventile zugeordnet sind, die durch die elektronische Steuer- und Regeleinheit analog ansteuerbar sind und die die Radbremsen wahlweise mit der Druckquelle oder dem Druckmittelvorratsbehälter verbinden.

Eine derartige Bremsanlage ist z. B. aus der internationalen Patentanmeldung WO 99/41125 bekannt. Das Besondere besteht bei der vorbekannten Bremsanlage darin, dass eine hydraulische Anordnung vorgesehen ist, die ein Beaufschlagen mindestens einer Radbremse mit einem definierten Druckmittelvolumen ermöglicht. Dem Erfassen des in der Radbremse durch die Wirkung des Druckmittelvolumens hervorgerufenen Druckanstiegs dient ein Drucksensor. Die hydraulische Anordnung ist dabei vorzugsweise durch den Hochdruckspeicher gebildet, der mit einer Wegsensoreinrichtung zum Erfassen des Weges seines Medientrennelements versehen ist, deren Ausgangssignal dem definierten Druckmittelvolumens entspricht. Die Verwendung der erwähnten Wegsensoreinrichtung ist jedoch mit erheblichem Kostenaufwand verbunden.

Es ist daher Aufgabe der vorliegenden Erfindung, ein Verfahren zum Detektieren von sich im System befindlichen Gasen bei einer zuverlässig funktionierenden Bremsanlage der eingangs genannten Gattung zur Verfügung zu stellen, das eine Eliminierung der Wegsensoreinrichtung bei einer Erhöhung der Genauigkeit bei der Gaserkennung ermöglicht.

Zur Lösung dieser Aufgabe werden erfindungsgemäß die folgenden Verfahrensschritte vorgeschlagen:
a) Füllen der mindestens einem Bremskreis zugeordneten Radbremsen mit Druckmittel;
b) Erhöhen eines Ausgangsdruckwertes in den Radbremsen auf einen vorbestimmten Druckwert;
c) Trennen der beiden Radbremsen;
d) Entleeren einer der beiden Radbremsen mit gleichzeitiger Senkung des darin herrschenden Druckes auf den Ausgangsdruckwert;
e) Herstellen einer hydraulischen Verbindung der beiden Radbremsen zum Zweck eines Druckausgleichs bei gleichzeitiger Ermittlung des in den Radbremsen herrschenden Druckes;
f) Ermitteln der Menge der im Bremskreis enthaltenen, im Druckmittel ungelösten Gas- bzw. Luftmenge durch differenzbildenden Vergleich des im Schritt e) ermittelten Druckwertes mit einem Referenzdruckwert.

Vorteilhafte Merkmale des erfindungsgemäßen Verfahrens sind in den Unteransprüchen 2 bis 15 aufgeführt.

Weitere Einzelheiten, Merkmale und Vorteile der Erfindung gehen aus der nachfolgenden Beschreibung eines Ausführungsbeispiels unter Bezugnahme auf die beiliegende schematische Zeichnung hervor, wobei für gleiche Komponenten die gleichen Bezugszeichen verwendet werden. In der Zeichnung zeigen:
- Fig. 1: den Aufbau einer Bremsanlage gemäß einer ersten Ausführungsform im inaktiven bzw. stromlosen Zustand mit Diagonalaufteilung der Bremskreise, bei der das erfindungsgemäße Verfahren angewendet werden kann;
- Fig. 2: den Aufbau einer Bremsanlage gemäß einer zweiten Ausführungsform im inaktiven bzw. stromlosen Zustand mit Schwarz-Weiss-Aufteilung der Bremskreise, bei der das erfindungsgemäße Verfahren angewendet werden kann;
- Fig. 3: eine diagrammatische Darstellung der Durchführung des erfindungsgemäßen Verfahrens bei der Bremsanlage nach Fig. 1; und
- Fig. 4: eine diagrammatische Darstellung der Durchführung des erfindungsgemäßen Verfahrens bei der Bremsanlage nach Fig. 2.

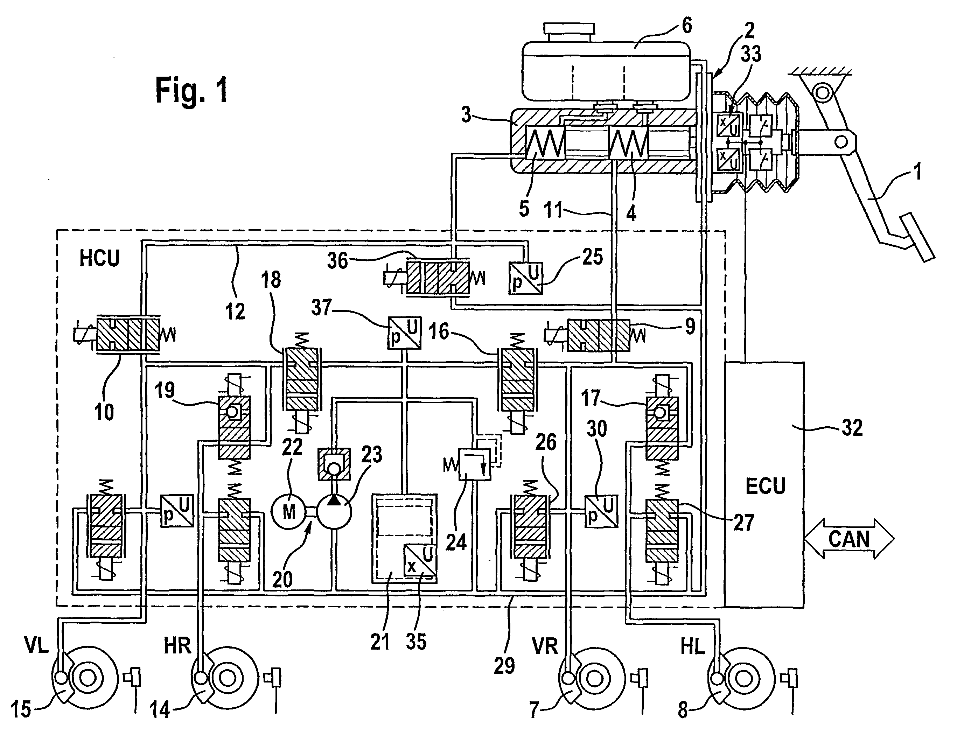

Die in Fig. 1 der Zeichnung lediglich schematisch dargestellte Bremsanlage des Typs "Brake-by-wire" weist eine mittels eines mit dem Bezugszeichen 1 versehenen Betätigungspedals betätigbare Betätigungseinheit 2 auf, die im wesentlichen aus einem zweikreisigen Druckgeber bzw. Hauptbremszylinder 3 sowie einem drucklosen Druckmittelvorratsbehälter 6 besteht. Der Hauptbremszylinder 3 weist seinerseits zwei voneinander getrennte Druckräume 4, 5 auf, die mit dem Druckmittelvorratsbehälter 6 in Verbindung stehen. An den ersten Druckraum (Primärdruckraum) 4 sind mittels einer absperrbaren ersten hydraulischen Leitung 11 eine dem rechten Vorderrad des Kraftfahrzeugs zugeordnete Radbremse 7 sowie eine dem linken Hinterrad des Kraftfahrzeugs zugeordnete Radbremse 8 angeschlossen. Das Absperren der Leitung 11 erfolgt mittels eines ersten Trennventils 9, das vorzugsweise als ein elektromagnetisch betätigbares, stromlos offenes (S0-) 2/2-Wegeventil ausgebildet ist. Die Ausgangsseite des ersten Trennventils 9 ist mittels einer hydraulischen Verbindungsleitung einerseits direkt mit der Radbremse 7 und andererseits über ein Einlassventil 17 mit der Radbremse 8 verbunden.

Der zweite Druckraum 5 des Hauptbremszylinders 2 ist über eine mittels eines zweiten Trennventils 10 absperrbare zweite hydraulische Leitung 12 mit dem anderen Radbremsenpaar 14, 15 verbindbar, das dem rechten Hinterrad des Kraftfahrzeugs sowie dem linken Vorderrad des Kraftfahrzeugs zugeordnet ist. Das zweite Trennventil 10 ist als ein elektromagnetisch betätigbares, stromlos offenes (SO-), analog regelbares 2/2-Wegeventil ausgebildet, dessen Ausgangsseite einerseits direkt mit der Radbremse 15 und andererseits über ein weiteres Einlassventil 19 mit der Radbremse 14 verbunden ist. Ein Drucksensor 25 ermöglicht die Erfassung des im zweiten Druckraum 5 eingesteuerten hydraulischen Druckes. Ansonsten entspricht der Aufbau des an den zweiten Druckraum 5 des Hauptbremszylinders 2 angeschlossenen hydraulischen Kreises identisch dem des in der vorstehenden Beschreibung erläuterten Bremskreises 11, so dass er im nachfolgenden Text nicht mehr erörtert zu werden braucht.

Wie der Zeichnung weiter zu entnehmen ist, ist ein als Fremddruckquelle dienender, als Kolbenspeicher ausgeführter Hochdruckspeicher 21 vorgesehen, der mit einem Wegsensor 35 versehen ist, der den Weg seines Kolbens überwacht. Der vom Hochdruckspeicher 21 aufgebrachte hydraulische Druck wird mittels eines Drucksensors 37 ermittelt. Dem Aufladen des Hochdruckspeichers 21 dient ein Motor-Pumpen-Aggregat 20, das seinerseits aus einer mittels eines Elektromotors 22 angetriebenen Pumpe 23 besteht, der ein Überdruckventil 24 parallel geschaltet ist. Die Saugseite der Pumpe 23 ist an den vorhin erwähnten Druckmittelvorratsbehälter 6 angeschlossen. An den Hochdruckspeicher 21 sind sowohl .über entsprechend zugeordnete Einlassventile 16, 18 die Radbremsen 7, 15 als auch - über die vorhin erwähnten Einlassventile 17, 19 - die Radbremsen 8, 14 angeschlossen, so dass ein Druckaufbau in den Radbremsen 7, 8, 14, 15 mittels des Hochdruckspeichers 21 möglich ist. Die den Fahrzeugvorderachsbremsen 7, 15 zugeordneten Einlassventile 16, 18 sind im gezeigten Beispiel als stromlos geschlossene (SG-), analog regelbare 2/2-Wegeventile ausgebildet, während die den Fahrzeughinterachsbremsen 8, 14 zugeordneten Einlassventile 17, 19, wie in der Zeichnung dargestellt, als elektromagnetisch betätigbare 2/2-Wegeventile mit integrierter Überdruckfunktion oder als stromlos offene (SO-) 2/2-Wege- bzw. Schaltventile ausgeführt sein können.

Dem Abbau des in den Radbremsen 7, 8 eingesteuerten hydraulischen Druckes dienen zwei elektromagnetisch betätigbare, vorzugsweise stromlos geschlossene (SG-) 2/2-Wege- bzw. Auslassventile 26, 27, deren Ausgangsanschlüsse an eine zum Druckmittelvorratsbehälter 6 führende Leitung 29 angeschlossen sind. Das Auslassventil 26, das der Radbremse 7 des rechten Vorderrades des Fahrzeuges zugeordnet ist, ist als ein stromlos geschlossenes (SG-), analog regelbares 2/2-Wegeventil ausgebildet, während das der Radbremse 8 des linken Hinterrades des Fahrzeuges zugeordnete Auslassventil 27 als ein stromlos geschlossenes (SG-) 2/2-Wege- bzw. Schaltventil ausgebildet ist. Dabei ist der Radbremse 7 ein Drucksensor 30 zugeordnet, mit dessen Hilfe der darin herrschende hydraulische Druck ermittelt wird. Außerdem ist der zweite Druckraum 5 des Hauptbremszylinders 2 über ein stromlos geschlossenes (SG-), analog regelbares 2/2-Wegeventil 36 an die vorhin erwähnte Leitung 29 angeschlossen und somit mit dem Druckmittelvorratsbehälter 6 verbindbar.
Das analog regelbare 2/2-Wegeventil 36 sowie das zweite Trennventil 10 bilden somit eine elektrisch steuerbare Einrichtung, die in der Betriebsart "Brake-by-Wire" eine vorgewählte Nachgiebigkeit des Bremspedals 1 ermöglicht und somit dem Fahrer das gewohnte Bremspedalgefühl vermittelt. Der Ansteuerung des Motor-Pumpen-Aggregats 20, der vorhin erwähnten Ventile 9, 10, 16, 17, 18, 19, 26, 27, 36 sowie der dem zweiten Bremskreis 12 zugeordneten, nicht näher bezeichneten Auslassventile, die in einer lediglich schematisch angedeuteten hydraulischen Steuereinheit (HCU) integriert sind, dient eine elektronische Steuer- und Regeleinheit ECU 32, der insbesondere die Ausgangssignale der Drucksensoren 25, 30, eines der Radbremse 15 zugeordneten Drucksensors, sowie einer vorzugsweise redundant ausgeführten Bremswunscherfassungseinrichtung 33 zugeführt werden, die dem Hauptbremszylinder 3 zugeordnet ist.

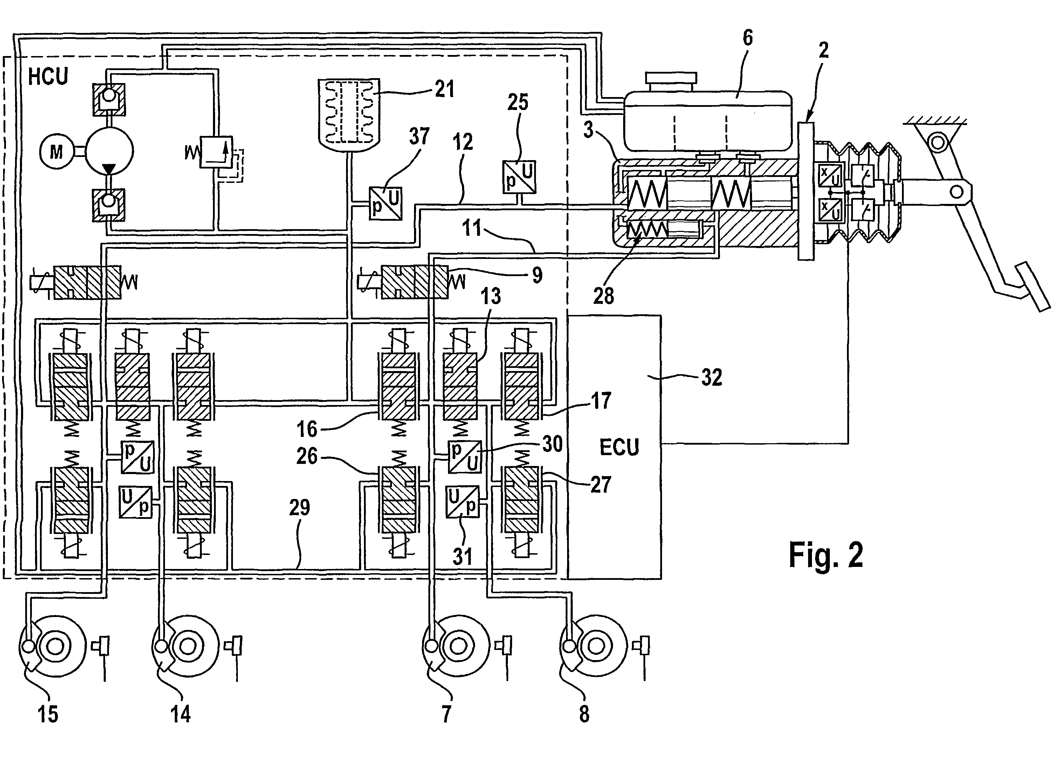

Der Aufbau der in Fig. 2 gezeigten zweiten Ausführung der Bremsanlage, die insbesondere für eine Schwarz-Weiss-Aufteilung der Bremskreise geeignet ist, entspricht im wesentlichen dem der Ausführung gemäß Fig. 1. Hierbei sind die Radbremsenpaare 7, 8 sowie 14, 15 jeweils einer Fahrzeugachse zugeordnet. Gegenüber der ersten Ausführung ist der vorzugsweise als Faltenbalgspeicher ausgeführte Hochdruckspeicher 21 mit den Eingangsanschlüssen sämtlicher Einlassventile 16, 17, -, - direkt verbunden, zwischen deren Ausgangsanschlüssen Druckausgleichsventile 13, - geschaltet sind, die eine radindividuelle Regelung der in den Radbremsen 7, 8, 14, 15 eingesteuerten hydraulischen Drücke ermöglichen. Sämtlichen Radbremsen 7,8,14,15 sind Drucksensoren 30,31,-,- zugeordnet. Mit dem Hauptbremszylinder wirkt 2 ein Wegsimulator 28 zusammen, der dem Fahrzeugführer im "Brake-by-wire"-Modus das gewöhnliche Gefühl am Bremspedal 1 vermittelt.

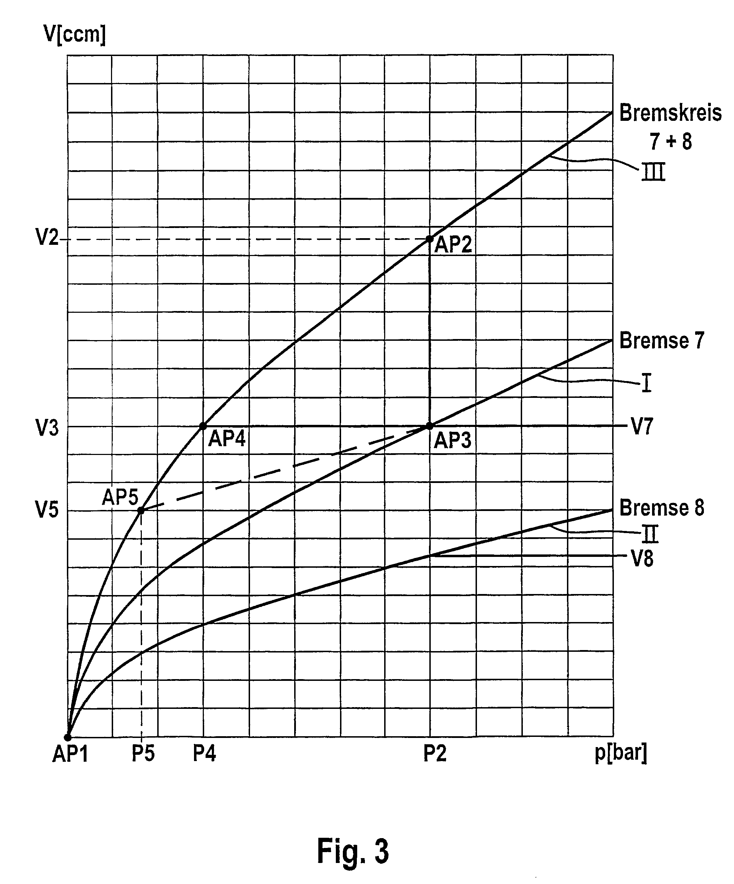

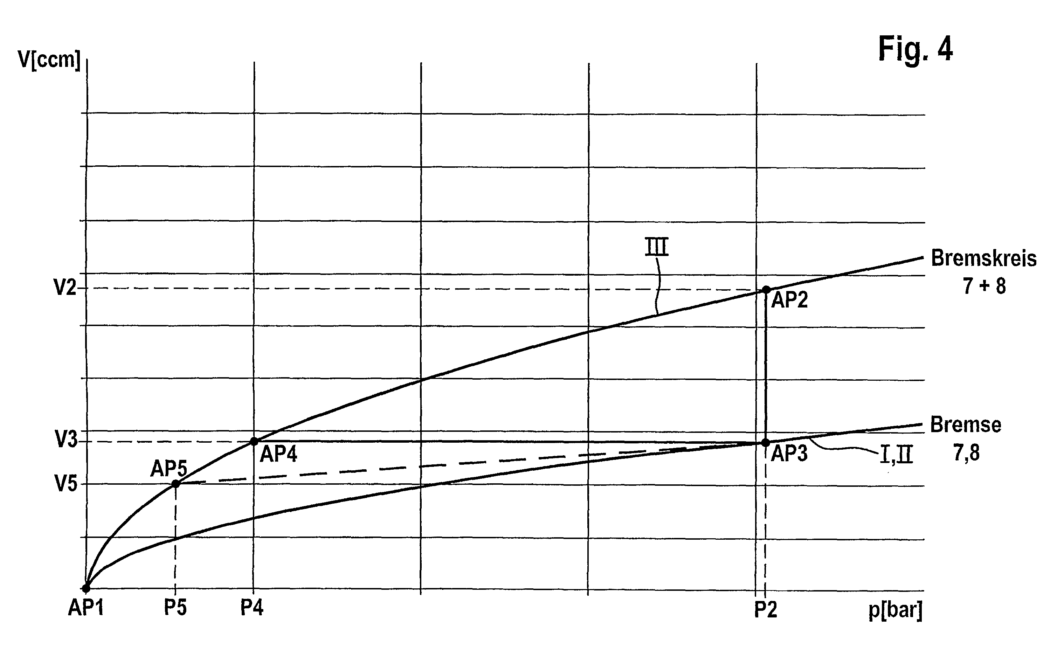

Im nachfolgenden Text wird das erfindungsgemäße Verfahren am Beispiel der in Fig. 1 gezeigten erfindungsgemäßen Bremsanlage im Zusammenhang mit Fig. 3 näher erläutert. Bei der Erläuterung wird lediglich der an den ersten Druckraum 4 des Hauptbremszylinders 3 angeschlossene Bremskreis 11 betrachtet, der die dem rechten Vorderrad (VR) zugeordnete Radbremse 7 sowie die dem linken Hinterrad (HL) zugeordnete Radbremse 8 umfasst. Die entsprechenden Druck-Volumen-Kennlinien der Radbremsen 7, 8 sind in Fig. 3 und 4 mit dem Bezugszeichen I, II versehen, während die dem Gesamtbremskreis 11 entsprechende Druck-Volumen-Kennlinie mit dem Bezugszeichen III bezeichnet ist.

Bei der Durchführung des erfindungsgemäßen Verfahrens werden die Radbremsen 7, 8, ausgehend von einem Zustand, der in der diagrammatischen Darstellung gemäß Fig. 3 und 4 durch den Punkt AP1 definiert ist, in einem ersten Verfahrensschritt a) mit einem Druckmittelvolumen V2 gefüllt, wobei eine Druckerhöhung auf den Druckwert P2 erfolgt. Dieser Zustand wird im Diagramm durch den Punkt AP2 der Druck-Volumen-Kennlinie III dargestellt, wobei das entsprechende Druckmittelvolumen V2 durch die den Radbremsen 7, 8 zugeführten Druckmittelvolumina V7, V8 sowie die möglicherweise in den Radbremsen 7, 8 existierenden Luft- bzw. Gasvolumina V_{7Luft}, V_{8Luft} gebildet wird. Der beschriebene Füll- bzw. Druckaufbauvorgang erfolgt bei geschlossenen Trennventilen 9, 10 ausschließlich durch den Hochdruckspeicher 21. In einem zweiten Schritt b) werden die Radbremsen 7, 8 durch Schließen des der Radbremse 8 zugeordneten Einlassventils 17 voneinander getrennt. In einem dritten Verfahrensschritt c) wird die Bremse 8 durch Öffnen des ihr zugeordneten Auslassventils 27 in den Druckmittelvorratsbehälter 6 entleert und der darin herrschende Druck auf den Anfangswert P1 = 0 gesenkt. Der erreichte Zustand ist in der diagrammatischen Darstellung gemäß Fig. 3 und 4 durch den Punkt AP3 der Druck-Volumen-Kennlinie I dargestellt.

Im nachfolgenden, vierten Verfahrensschritt d) werden die beiden Radbremsen 7, 8 durch Öffnen des vorhin erwähnten Einlassventils 17 miteinander verbunden, so dass ein Druckausgleich mit gleichzeitiger Senkung des in den Bremsen 7, 8 herrschenden Druckes stattfindet. Befinden sich in dem entsprechenden Druckmittelvolumen V7 keine Gase bzw. keine Luft, so wird der Zustand erreicht, der durch den Punkt AP4 der Druck-Volumen-Kennlinie III mit den Koordinaten P4, V3 dargestellt ist. Sind jedoch in dem entsprechenden Druckmittelvolumen V7 Gase bzw. Luft enthalten, erfolgt der Druckausgleich bzw. die Drucksenkung entsprechend der im Diagramm gestrichelt dargestellten Geraden, so dass sich der durch den Punkt AP5 der Druck-Volumen-Kennlinie III definierte Zustand ergibt, in dem für die entsprechenden Koordinaten P5, V5 die folgenden Beziehungen gelten: P5 < P4, V5 < V3.
Anschließend wird in einem fünften Schritt e) durch Vergleich des Druckwertes P5 mit dem Druckwert P4, der in dargestellten Beispiel als Referenzdruckwert dient, die in dem Bremskreis 7,8 enthaltene Gas- bzw. Luftmenge V_{8Luft} ermittelt.

Danach werden die vorhin beschriebenen Verfahrensschritte a) bis e) bei der Entleerung der erstgenannten Radbremse 7 zur Ermittlung der in der Radbremse 7 enthaltenen Gas- bzw. Luftmenge V_{7Luft} durchgeführt. Es ist durchaus denkbar, das beschriebene Verfahren bei den zwei anderen, dem zweiten Bremskreis 12 zugeordneten Radbremsen 14, 15 durchzuführen.

Das vorhin erläuterte Verfahren kann jedoch auch zwischen den beiden Bremskreisen 11, 12 durchgeführt werden. Zu diesem Zweck werden sämtliche Radbremsen mit geöffneten Einlassventilen unterhalb des Speicherladedrucks kurzgeschlossen.

Zum Schluss wird die ermittelte Gesamtgas- bzw. -luftmenge V_{LuftGesamt} mit einem vorher festgelegten kritischen Wert V_{Luftkrit} verglichen. Wird der letztgenannte Wert überschritten, werden geeignete Warnmaßnahmen, beispielsweise ein Aufleuchten einer Kontrolllampe, eingeleitet.

Die Durchführung des erfindungsgemäßen Verfahrens zum Detektieren von im Druckmittel ungelösten Gasen bzw. Luft bei der in Fig. 2 dargestellten Bremsanlage ist in Fig. 4 dargestellt. Da die einzelnen Verfahrensschritte identisch denen entsprechen, die im Zusammenhang mit Fig. 3 erläutert wurden, ist keine ausführliche Erläuterung erforderlich. Die Verbindung sowie die Trennung der beiden geprüften Radbremsen zum Zweck des Druckausgleichs erfolgt mitels der im Zusammenhang mit Fig. 2 erwähnten Druckausgleichsventile 13,-. Da die von den jeweils einer Fahrzeugachse zugeordneten Radbremsen 7,8,bzw. 14,15 aufgenommenen Druckmittelvolumina gleich sind, sind die Druck-Volumen-Kennlinien I, II der beiden Radbremsen 7,8 identisch, wobei die Gesamt-Druck-Volumen-Kennlinie III der beiden Radbremsen 7,8 durch Verdoppelung der entsprechenden Druck- und Volumenwerte entsteht.

## Patentansprüche

1. Verfahren zur Erkennung von Gasen bzw. Luft bei einer elektrohydraulischen Bremsanlage für Kraftfahrzeuge, die in einer Betriebsart "Brake-by-Wire" sowohl vom Fahrzeugführer als auch unabhängig vom Fahrzeugführer ansteuerbar ist,
mit einem mittels eines Bremspedals (1) betätigbaren, mindestens einen Druckraum (4,5) aufweisenden Hauptbremszylinder (3),
einem drucklosen Druckmittelvorratsbehälter (6),
einer mittels einer elektronischen Steuer- und
Regeleinheit (32) ansteuerbaren hydraulischen Druckquelle (20), mit deren Druck zwei einem Bremskreis zugeordnete Radbremsen (7,8) des Fahrzeuges beaufschlagbar sind, die mittels mindestens einer durch ein Trennventil (9) absperrbaren Verbindung (11) an den Hauptbremszylinder (3) angeschlossen sind und denen Druckregelventile bzw. Ein- und Auslassventile (16,17,26,27) zugeordnet sind, die durch die elektronische Steuer- und Regeleinheit analog ansteuerbar sind und die die Radbremsen (7,8) wahlweise mit der Druckquelle (20) oder dem Druckmittelvorratsbehälter (6) verbinden,
**gekennzeichnet durch** die folgenden Verfahrensschritte:
a) Füllen der mindestens einem Bremskreis zugeordneten Radbremsen (7,8) mit Druckmittel;
b) Erhöhen eines Ausgangsdruckwertes (P1) in den Radbremsen (7,8) auf einen vorbestimmten Druckwert (P2);
c) Trennen der beiden Radbremsen (7,8);
d) Entleeren einer (8) der beiden Radbremsen (7,8) mit gleichzeitiger Senkung des darin herrschenden Druckes auf den Ausgangsdruckwert (P1);
**e)** Herstellen einer hydraulischen Verbindung der beiden Radbremsen (7,8) zum Zweck eines Druckausgleichs bei gleichzeitiger Ermittlung des in den Radbremsen (7,8) herrschenden Druckes (P5);
**f)** Ermitteln der Menge der im Bremskreis enthaltenen, im Druckmittel ungelösten Gase bzw. Luft (V_{Luft}) **durch** differenzbildenden Vergleich des im Schritt e) ermittelten Druckwertes (P5) mit einem Referenzdruckwert (P4).

2. Verfahren nach Anspruch 1 **dadurch gekennzeichnet, dass** das dem im Schritt e) ermittelten Druckwert (P5) entsprechende, von den Radbremsen (7,8) aufgenommene Druckmittelvolumen (V5) sowie das dem Referenzdruckwert (P4) entsprechende Druckmittelvolumenwert (V3) ermittelt werden, wobei die Menge der im Bremskreis enthaltenen, im Druckmittel ungelösten Gase bzw. Luft (V_{Luft}) durch differenzbildenden Vergleich (V3 - V5) der Druckmittelvolumenwerte (V3, V5) ermittelt wird.

3. Verfahren nach Anspruch 1 oder 2 **dadurch gekennzeichnet, dass** als der Referenzdruckwert der Druckwert (P4) dient, der dem gas- bzw. luftfreien Zustand der Bremsanlage entspricht.

4. Verfahren nach einem der Ansprüche 1 bis 3 **dadurch gekennzeichnet, dass** das Füllen der Radbremsen (7,8) durch die hydraulische Druckquelle, vorzugsweise einen Hochdruckspeicher (21), erfolgt.

5. Verfahren nach einem der Ansprüche 1 bis 4 **dadurch gekennzeichnet, dass** das Erhöhen des Anfangsdruckwertes (P1) in den Radbremsen (7,8) durch die hydraulische Druckquelle, vorzugsweise einen Hochdruckspeicher (21), erfolgt.

6. Verfahren nach einem der Ansprüche 1 bis 5 **dadurch gekennzeichnet, dass** das Trennen der Radbremsen (7,8) mittels eines zwischen den Radbremsen (7,8) geschalteten Druckausgleichsventils (13) erfolgt.

7. Verfahren nach einem der Ansprüche 1 bis 5 **dadurch gekennzeichnet, dass** das Trennen der Radbremsen (7,8) bei einer Bremsanlage mit Diagonalaufteilung der Bremskreise mittels eines der Einlassventile (17) erfolgt.

8. Verfahren nach einem der Ansprüche 1 bis 7 **dadurch gekennzeichnet, dass** das Entleeren der Radbremse (8) durch Öffnen des ihr zugeordneten Auslassventils (27) in den Druckmittelvorratsbehälter (6) erfolgt.

9. Verfahren nach einem der Ansprüche 1 bis 8 **dadurch gekennzeichnet, dass** das Herstellen der hydraulischen Verbindung zwischen den Radbremsen (7,8) durch Öffnen des Druckausgleichsventils (13) erfolgt.

10. Verfahren nach einem der Ansprüche 1 bis 9 **dadurch gekennzeichnet, dass** die Ermittlung des in den Radbremsen (15,14) herrschenden Druckes (P5) mittels eines der den Radbremsen (7,8) zugeordneten Drucksensoren (30,31) erfolgt.

11. Verfahren nach einem der Ansprüche 1 bis 10 **dadurch gekennzeichnet, dass** die Ermittlung des von den Radbremsen (7,8) aufgenommenen Druckmittelvolumens (V5) anhand einer den beiden Radbremsen (7,8) gemeinsamen Druck-Volumen-Kennlinie (III) erfolgt.

12. Verfahren nach einem der Ansprüche 3 bis 11 **dadurch gekennzeichnet, dass** die Ermittlung des dem gas- bzw. luftfreien Zustand der Bremsanlage entsprechenden Druckwertes (P4) bzw. des dem Druckwert (P4) zugeordneten, von den Radbremsen (7,8) aufgenommenen Druckmittelvolumens (V3) anhand der den beiden Radbremsen (7,8) gemeinsamen Druck-Volumen-Kennlinie (III) erfolgt.

13. Verfahren nach einem der Ansprüche 1 bis 12 **dadurch gekennzeichnet, dass** die im Verfahrensschritt f) ermittelte Gas- bzw. Luftmenge (V_{Luft}) mit einem vorher bestimmten (festgelegten) kritischen Wert (V_{Luftkrit}) verglichen wird.

14. Verfahren nach einem der Ansprüche 1 bis 6 und 8 bis 13 **gekennzeichnet durch** Anwendung bei einer Bremsanlage mit Schwarz-Weiss-Aufteilung der Bremskreise.

15. Verfahren nach einem der Ansprüche 1 bis 5 und 7 bis 13 **gekennzeichnet durch** Anwendung bei einer Bremsanlage mit Diagonalaufteilung der Bremskreise.

## Revendications

1. Procédé pour identifier des gaz ou de l'air dans une installation de freinage électrohydraulique pour véhicules automobiles, qui peut être commandée dans un type de fonctionnement "brake-by-wire" aussi bien par le conducteur du véhicule que d'une manière indépendante du conducteur du véhicule, comportant
un maître-cylindre de frein (3) pouvant être actionné au moyen d'une pédale de frein (1) et comportant au moins une chambre de pression (4, 5),
un réservoir pour fluide de pression (6) sans pression,
une source de pression hydraulique (20) pouvant être commandée au moyen d'une unité électronique de commande et de régulation (32), et dont la pression peut charger deux freins de roues (7, 8) du véhicule automobile, associés à un circuit de freinage et qui sont raccordés au maître-cylindre de frein (3) à l'aide d'au moins une liaison (11) pouvant être bloquée par une soupape de sectionnement (9), et auxquels sont associées des soupapes de régulation de pression et des soupapes d'entrée et de sortie (16, 17, 26, 27), qui peuvent être commandées de façon analogique par l'unité électronique de commande et de régulation et qui relient les freins de roues (7, 8) au choix à la source de pression (20) ou au réservoir de fluide de pression (6),
**caractérisé par** les étapes de procédé suivantes:
a) remplissage des freins de roues (7, 8) associés au moins à un circuit de freinage, avec le fluide de pression;
b) accroissement d'une valeur de la pression de sortie (P1) dans les freins de roues (7, 8) à une valeur de pression prédéterminée (P2);
c) séparation des deux freins de roues (7, 8);
d) vidage de l'un (8) des deux freins de roues (7, 8) avec réduction simultanée de la pression, qui y règne, à la valeur de pression de sortie (P1);
e) établissement d'une liaison hydraulique des deux freins de roues (7, 8) pour réaliser une compensation de pression lors d'une détermination simultanée de la pression (P5) régnant dans les freins de roues (7, 8);
f) détermination de la quantité des gaz ou de l'air (Vₐᵢᵣ) contenus dans le circuit de freinage et non dissous dans le fluide de pression, par comparaison, par formation d'une différence, de la valeur de pression (P5) déterminée lors de l'étape e) et d'une valeur de pression de référence (P4).

2. Procédé selon la revendication 1, **caractérisé en ce que** le volume de fluide de pression (V5), qui correspond à la valeur de pression (P5) déterminée lors de l'étape e) et qui est logé dans les freins de roues (7, 8), ainsi que la valeur (V3) du volume de fluide de pression, qui correspond à la valeur de pression de référence (P4), sont déterminés, et au cours duquel la quantité des gaz ou de l'air (Vₐᵢᵣ) contenus dans le circuit de freinage, non dissous dans le fluide de pression, est déterminée par comparaison, par formation d'une différence (V3-V5), des valeurs (V3, V5) du volume de fluide de pression.

3. Procédé selon la revendication 1 ou 2, **caractérisé en ce qu'**on utilise comme valeur de pression de référence la valeur de pression (P4), qui correspond à l'état sans gaz ou sans air de l'installation de freinage.

4. Procédé selon l'une des revendications 1 à 3, **caractérisé en ce que** le remplissage des freins de roues (7, 8) s'effectue au moyen de la source de pression hydraulique, de préférence un accumulateur à haute pression (21).

5. Procédé selon l'une des revendications 1 à 4, **caractérisé en ce que** l'augmentation de la valeur de pression initiale (P1) dans les freins de roues (7, 8) est réalisée à l'aide de la source de pression hydraulique, de préférence un accumulateur à haute pression (21).

6. Procédé selon l'une des revendications 1 à 5, **caractérisé en ce que** la séparation des freins de roues (7, 8) est réalisée à l'aide d'une soupape de compensation de pression (13) branchée entre les freins de roues (7, 8).

7. Procédé selon l'une des revendications 1 à 6, **caractérisé en ce que** la séparation des freins de roues (7, 8) s'effectue, dans le cas d'une installation de freinage comportant une répartition diagonale des circuits de freinage, à l'aide de l'une des soupapes d'entrée (17).

8. Procédé selon l'une des revendications 1 à 7, **caractérisé en ce que** le vidage du frein de roue (8) est réalisé par ouverture de la soupape de sortie (26), qui lui est associée, dans le réservoir de fluide de pression (6).

9. Procédé selon l'une des revendications 1 à 8, **caractérisé en ce que** l'établissement de la liaison hydraulique entre les freins de roues (7, 8) est réalisé par ouverture de la soupape de compensation de pression (13).

10. Procédé selon l'une des revendications 1 à 9, **caractérisé en ce que** la détermination de la pression (P5) régnant dans les freins de roues (15, 14) s'effectue à l'aide de l'un des capteurs de pression (30, 31) associé aux freins de roues (7, 8).

11. Procédé selon l'une des revendications 1 à 10, **caractérisé en ce que** la détermination du volume (V5) du fluide de pression, qui est reçu par les freins de roues (7, 8), s'effectue en fonction d'une courbe caractéristique pression - volume (III) commune aux deux freins de roues (7, 8).

12. Procédé selon l'une des revendications 3 à 11, **caractérisé en ce que** la détermination de la valeur de pression (P4), qui correspond à l'état sans gaz ou sans air de l'installation de freinage, ou du volume (V3) du fluide de pression associé à la valeur de pression (P4) et reçu par les freins de roues (7, 8), s'effectue en fonction de la courbe caractéristique pression - volume (III) commune aux deux freins de roues (7, 8).

13. Procédé selon l'une des revendications 1 à 12, **caractérisé en ce que** la quantité de gaz ou d'air (Vₐᵢᵣ) déterminée lors de l'étape f) du procédé est comparée à une valeur critique (V_{air critique}) déterminée (fixée) au préalable.

14. Procédé selon l'une des revendications 1 à 6 et 8 à 13, **caractérisé par** son utilisation dans une installation de freinage avec une répartition par tout ou rien des circuits de freinage.

15. Procédé selon l'une des revendications 1 à 5 et 7 à 11, **caractérisé par** son utilisation dans une installation de freinage comportant une répartition diagonale des circuits de freinage.

## Claims

1. Method for the recognition of gases or air in an electrohydraulic braking system for motor vehicles, which is actuatable in a 'brake-by-wire' mode of operation both by the vehicle operator and independently of the vehicle operator,
including a master brake cylinder (3) operable by a brake pedal (1) and having at least one pressure chamber (4, 5), a non-pressurized pressure fluid reservoir (6),
a hydraulic pressure source (20) actuatable by means of an electronic control and regulating unit (32), whose pressure can be applied to two wheel brakes (7, 8) of the vehicle associated with one brake circuit, said wheel brakes being connected to the master brake cylinder (3) by means of at least one connection (11) closable by a separating valve (9) and associated with which are pressure control valves or inlet and outlet valves (16, 17, 26, 27), respectively, that are actuatable by the electronic control and regulating unit in analog manner and connect the wheel brakes (7, 8) optionally to the pressure source (20) or the pressure fluid reservoir (6), **characterized by** the following process steps:
a) filling pressure fluid into the wheel brakes (7, 8) associated with at least one brake circuit,
b) raising an initial pressure value (P1) in the wheel brakes (7, 8) to a predefined pressure value (P2),
c) separating the two wheel brakes (7, 8),
d) evacuating one (8) of the two wheel brakes (7, 8) and simultaneously decreasing the pressure prevailing therein to the initial pressure value (P1),
e) establishing a hydraulic connection between the two wheel brakes (7, 8) for the purpose of pressure balance, while the pressure (P5) prevailing in the wheel brakes (7, 8) is simultaneously determined,
f) determining the quantity of gas or air (Vair) contained in the brake circuit and unsolved in the pressure fluid by a subtraction of the pressure value (P5) determined in step e) from a reference pressure value (P4).

2. Method as claimed in claim 1,
**characterized in that** the pressure fluid volume (V5) which corresponds to the pressure value (P5) determined in step e) and is received by the wheel brakes (7, 8) and the pressure fluid volume value (V3) corresponding to the reference pressure value (P4) are determined, and the quantity of the gases or air (Vₐᵢᵣ) contained in the brake circuit and unsolved in the pressure fluid is determined by a subtraction (V3 - V5) of the pressure fluid volume values (V3, V5).

3. Method as claimed in claim 1 or 2,
**characterized in that** the pressure value (P4) that corresponds to the gas-free or air-free condition of the brake system serves as the reference pressure value.

4. Method as claimed in any one of claims 1 to 3,
**characterized in that** the wheel brakes (7, 8) are filled by the hydraulic pressure source, preferably by a high-pressure accumulator (21).

5. Method as claimed in any one of claims 1 to 4,
**characterized in that** the initial pressure value (P1) in the wheel brakes (7, 8) is raised by the hydraulic pressure source, preferably by a high-pressure accumulator (21).

6. Method as claimed in any one of claims 1 to 5,
**characterized in that** the wheel brakes (7, 8) are separated by means of a pressure compensating valve (13) inserted between the wheel brakes (7, 8).

7. Method as claimed in any one of claims 1 to 5,
**characterized in that** the wheel brakes (7, 8) in a brake system with a diagonal allotment of the brake circuits are separated by means of one of the inlet valves (17).

8. Method as claimed in any one of claims 1 to 7,
**characterized in that** the wheel brake (8) is evacuated into the pressure fluid reservoir (6) by opening of its associated outlet valve (27).

9. Method as claimed in any one of claims 1 to 8,
**characterized in that** the hydraulic connection between the wheel brakes (7, 8) is established by opening the pressure compensating valve (13).

10. Method as claimed in any one of claims 1 to 9,
**characterized in that** the pressure (P5) prevailing in the wheel brakes (15, 14) is determined by means of one of the pressure sensors (30, 31) associated with the wheel brakes (7, 8).

11. Method as claimed in any one of claims 1 to 10,
**characterized in that** the pressure fluid volume (V5) received in the wheel brakes (7, 8) is determined by way of a pressure-volume characteristic curve (III) common to both wheel brakes (7, 8).

12. Method as claimed in any one of claims 3 to 11,
**characterized in that** the pressure value (P4) that corresponds to the gas-free or air-free condition of the brake system or the pressure fluid volume (V3) received in the wheel brakes (7, 8) and associated with the pressure value (P4) is determined by way of the pressure-volume characteristic curve (III) that is common to both wheel brakes (7, 8).

13. Method as claimed in any one of claims 1 to 12,
**characterized in that** the quantity of gas or air (Vair) determined in the process step f) is compared with a previously determined (fixed) critical value (V_{aircrit}).

14. Method as claimed in any one of claims 1 to 6 and 8 to 13,
**characterized by** its use in a brake system with a black-white allotment of the brake circuits.

15. Method as claimed in any one of claims 1 to 5 and 7 to 13,
**characterized by** its use in a brake system with diagonal allotment of the brake circuits.
